(19) Europäisches Patentamt
European Patent Office
Office européen des brevets

(11) Veröffentlichungsnummer: **0 011 759**
**B1**

(12) # EUROPÄISCHE PATENTSCHRIFT

(45) Veröffentlichungstag der Patentschrift: **30.12.81**

(51) Int. Cl.³: **C 09 D 3/80,** C 08 L 33/06, C 08 K 5/34

(21) Anmeldenummer: **79104444.9**

(22) Anmeldetag: **12.11.79**

(54) **Vernetzbare Lackbindemittel und ihre Verwendung zur Herstellung vernetzbarer Überzugsmittel.**

(30) Priorität: **24.11.78 DE 2850871**

(43) Veröffentlichungstag der Anmeldung: **11.06.80 Patentblatt 80/12**

(45) Bekanntmachung des Hinweises auf die Patenterteilung: **30.12.81 Patentblatt 81/52**

(84) Benannte Vertragsstaaten: **AT BE CH DE FR GB IT NL SE**

(56) Entgegenhaltungen:
**DE-A-1 965 740**
**DE-A-2 200 342**
**DE-A-2 218 836**
**DE-A-2 262 588**
**DE-A-2 314 044**
**DE-A-2 427 853**
**DE-A-2 460 329**
**DE-A-2 500 309**
**DE-B-1 170 571**

(73) Patentinhaber: **BAYER AG, Zentralbereich Patente, Marken und Lizenzen, D-5090 Leverkusen 1, Bayerwerk (DE)**

(72) Erfinder: **Höhlein, Peter, Dr., Wilhelmshofallee 12, D-4150 Krefeld (DE)**
Erfinder: **Schoeps, Jochen, Dr., Windmühlenstrasse 126, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 011 759 B1

# Vernetzbare Lackbindemittel und ihre Verwendung zur Herstellung vernetzbarer Überzugsmittel

Die Erfindung betrifft vernetzbare Lackbindemittel aus reaktiven Copolymerisaten und Lactamen, sowie ihre Verwendung in lösungsmittelfreien oder einen hohen Feststoffgehalt aufweisenden Lösungsmittel enthaltenden Überzugsmitteln.

Der Umweltschutz, insbesondere die Reinhaltung von Wasser und Luft, hat in jüngster Zeit zunehmend an Bedeutung gewonnen. In diesem Zusammenhang ist es unerwünscht, dass bei der Anwendung zahlreicher bekannter Überzugsmassen eine Verunreinigung der Luft wegen der in ihnen enthaltenen Lösungsmittel auftritt.

Eine Methode, auf Lösungsmittel ganz zu verzichten, ist die Herstellung von Pulverlacken. Hierbei treten jedoch neue Verarbeitungsprobleme gegenüber der herkömmlichen Lackierung mit Lösungen auf. Zu nennen sind insbesondere die Staubexplosionsgefahr, ein oft schlechter Verlauf, relativ hohe Einbrenntemperaturen, sowie die Notwendigkeit von umfangreichen Neuinvestitionen. Ausserdem bereitet das reproduzierbare Einstellen definierter Farbtöne oft erhebliche technische Schwierigkeiten. Daher wird der anderen umweltfreundlichen Entwicklung, den feststoffreichen Bindemittelsystemen, verstärktes Interesse entgegengebracht.

Eine andere Methode, auf organische Lösungsmittel weitestgehend zu verzichten, besteht darin, dass wasserverdünnbare Copolymerisatharze hergestellt werden, die allerdings noch den Nachteil haben, dass in erheblichen Mengen organische Hilfslöser (z.B. Alkohole) zugesetzt werden müssen, damit die neutralisierten Harze in ausreichendem Masse ohne Viskositätsanomalien mit Wasser verdünnt werden können.

Aus der DE-AS 11 70 571 sind Einbrennlacke bekannt, die als Bindemittel Copolymerisate aus copolymerisierten Einheiten von wenigstens 30 Gew.-% $\alpha,\beta$-ungesättigten Carbonsäurenitrilen, 0,5 bis 12 Gew.-% $\alpha,\beta$-ungesättigten Carbonsäuren und von $\alpha,\beta$-ungesättigten Carbonsäureestern enthalten. Den Bindemitteln werden als Vernetzungsmittel unter anderem Bislactame von Aminocarbonsäuren zugesetzt. Monolactame werden nur in Form ihrer Methylolverbindungen eingesetzt.

Die Copolymerisate der Lackbindemittel der vorliegenden Anmeldung können ebenfalls die vorstehend genannten Monomeren eingebaut enthalten, darüber hinaus jedoch in jedem Falle Hydroxylgruppen tragende Ester der (Meth)Acrylsäure und/oder spezielle Dioxanyl-Maleinsäurehalbester. Ferner enthalten die Lackbindemittel vorliegender Anmeldung spezielle Monolactame.

Die DE-OS 22 00 342 beschreibt pulverförmige Überzugsmittel aus Copolymerisaten von Hydroxylgruppen tragenden Monomeren, (Meth)Acrylsäureestern aliphatischer Monoalkohole und/oder Vinylaromaten, sowie bis zu 30 Gew.-% weiteren mono-olefinisch ungesättigten Monomeren, die mit verkappten Polyisocyanaten abgemischt sind, wobei das Verkappungsmittel unter anderem Lactame sind.

Demgegenüber betrifft die vorliegende Anmeldung keine pulverförmigen Lackbindemittel, und ferner enthält das Lackbindemittel die Lactame in freier, reaktiver Form.

Die DE-OS 23 14 044 lehrt u.a. Copolymerisate aus copolymerisierten Einheiten von (Meth)Acrylsäureestern einwertiger Alkohole, Hydroxy(meth)acrylaten und gegebenenfalls weiteren Monomeren in Gegenwart einer praktisch nicht flüchtigen, nicht polymerisierbaren, Hydroxylgruppen tragenden Flüssigkeit, wie niedermolekulare Polyole als Reaktivverdünner, herzustellen und diese mit Aminoplasten, Epoxidharzen oder Verbindungen mit endständigen Isocyanatgruppen zu wärmehärtbaren, schmelzbaren Zusammensetzungen zu verarbeiten. Lactame, wie sie in der vorliegenden Anmeldung als reaktionsfähiger Bestandteil der Lackbindemittel eingesetzt werden, werden nicht genannt.

Niedrige Alkohole als Reaktivverdünner, z.B. Butandiol oder Glycerin, zeigen eine schlechte Verträglichkeit mit den Copolymerisaten, so dass Entmischung eintreten kann; bei Verwendung von höhermolekularen Polykondensaten oder Polymerisaten stellt sich oft eine zu hohe Viskosität ein, so dass zusätzlich noch grössere Mengen Lösungsmittel zugesetzt werden müssen, wenn die Lacke z.B. durch Verspritzen appliziert werden sollen (vergl. deutsche Offenlegungsschrift 2 500 309). Ausserdem besteht die Gefahr, dass Verbindungen mit Schmelzpunkten oberhalb Raumtemperatur (z.B. Hydroxypivalinsäureneopenthylglykolester, Schmelzpunkt = 51 °C) aus der Harzlösung nach dem Abkühlen auskristallisieren und damit Entmischung eintritt.

Aus der DE-OS 24 60 329 sind Hydroxylgruppen enthaltende Copolymerisate bekannt, die zum Teil bezüglich ihrer Zusammensetzung mit denen der vorliegenden Anmeldung identisch sein können. Sie können in Gegenwart von Di- und Polyolen als Reaktivverdünner hergestellt werden. Die Vernetzung kann durch Polyisocyanate oder Aminoplastharze erfolgen. Lactame werden nicht als reaktive Verdünner genannt (vergl. auch DE-OS 22 18 836 und 22 62 588).

Weiter sind fremdvernetzbare, hydroxylgruppenhaltige Copolymerisate, die bezüglich ihrer Zusammensetzung mit Copolymerisaten der Lackbindemittel vorliegender Anmeldung identisch sein können, und die mit Melaminharzen oder Polyisocyanaten zu witterungsbeständigen Überzügen verarbeitet werden können, und ein spezielles Verfahren zu ihrer Herstellung aus der DE-OS 1 965 740 bekannt. Weder enthalten diese pulverisierbaren Harze ein reaktives Verdünnungsmittel noch werden sie in Gegenwart eines solchen hergestellt.

Aufgabe der Erfindung war die Bereitstellung fremdvernetzbarer Lackbindemittel, die in lösungsmittelfreien oder in lösungsmittelhaltigen, jedoch einen hohen Feststoffgehalt aufweisenden, gegebenenfalls wasserverdünnbaren Überzugsmitteln eingesetzt werden können. Lösungsmittelfrei bedeutet in diesem Zusammenhang frei von konventionellen Lösungsmitteln, die nicht bei Trocknung, Härtung (Vernetzung) des Lackfilms chemisch verändert werden bzw. verändert werden können.

Gegenstand der Erfindung sind vernetzbare Lackbindemittel aus einer Mischung aus

A. 99–50 Gew.-%, vorzugsweise 95–60 Gew.-%, eines Copolymerisats bestehend aus copolymerisierten Einheiten von

a) 5–90 Gew.-% eines Esters der Acryl- oder Methacrylsäure mit 1–8 Kohlenstoffatomen in der aliphatischen Alkoholkomponente oder deren Mischungen;

b) 0–60 Gew.-% eines Vinyl- oder Isopropylenaromaten mit 8–14 Kohlenstoffatomen oder deren Mischungen;

c) 1–40 Gew.-% mindestens eines copolymerisierbaren Monoesters aus den Gruppen

I. Monoester aus Acryl- oder Methacrylsäure und einem 2- bis 4-wertigen Alkohol mit 2–8 Kohlenstoffatomen oder deren Mischungen und/oder

II. Maleinsäurehalbester der Formel

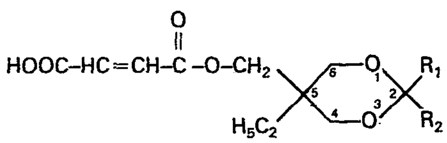

worin $R_1$=H oder Methyl und $R_2$=H, Methyl, Ethyl, Propyl, Isopropyl oder Phenyl bedeuten; und gegebenenfalls

d) bis zu 60 Gew.-% eines oder mehrerer nicht unter a) bis c) genannten olefinisch ungesättigten, copolymerisierbaren Monomeren und

B. 1–50 Gew.-%, vorzugsweise 5–40 Gew.-%, eines gesättigten Lactams der Formel

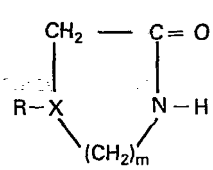

Beispielhaft seien namentlich bzw. formelmässig die folgenden Verbindungen der einzelnen Gruppen genannt:

Gruppe A.a.: Ethylacrylat, Methylacrylat, n- bzw. iso-Propylacrylat, n-Butylacrylat, 2-Ethylhexylacrylat, 2-Ethylhexylmethacrylat, Isooctylacrylat, tert.-Butylacrylat, Methylmethacrylat, Ethylmethacrylat, n- bzw. iso-Propylmethacrylat, Butylmethacrylate, Isooctylmethacrylat und gegebenenfalls Mischungen derselben; bevorzugt sind (Meth)Acrylsäurealkylester mit 1–4 Kohlenstoffatomen in der Alkoholkomponente.

Gruppe A.b.: Styrol, α-Methylstyrol, o- bzw. p-Chlorstyrol, o-, m- oder p-Methylstyrol, p-tert.-Butylstyrol und gegebenenfalls Mischungen derselben; bevorzugt ist Styrol.

Gruppe A.c.: I. 2-Hydroxyethyl(meth-)acrylat, 2-Hydroxyproyl(meth-)acrylat, 4-Hydroxybutyl(meth-)acrylat, Trimethylolpropanmono(meth-)acrylat, Pentaeythritmono(meth-)acrylat, oder deren Mischungen; vorzugsweise 2-Hydroxypropyl(meth)acrylat.

II. (5-Ethyl-5-m-dioxanyl)methyl-maleinsäurehalbester, (2-Methyl-5-ethyl-5-m-dioxanyl)methyl-maleinsäurehalbester, (2,5-Diethyl-5-m-dioxanyl)methyl-maleinsäurehalbester, (2-Propyl-5-ethyl-5-m-dioxanyl)methyl-maleinsäurehalbester, (2-Isopropyl-5-ethyl-5-m-dioxanyl)-methyl-maleinsäurehalbester, (2-Phenyl-5-ethyl-5-m-dioxanyl)methyl-maleinsäurehalbester, (2,2-Dimethyl-5-ethyl-5-m-dioxanyl)methyl-maleinsäurehalbester oder deren Mischungen.

Gruppe A.d.: Acrylsäure, Methacrylsäure; Fumarsäure, Itaconsäure, Maleinsäure, Halbester der vorgenannten Dicarbonsäuren mit 4–8 Kohlenstoffatomen in der Alkoholkomponente, Glycidylmethacrylat oder dessen Umsetzungsprodukte mit gesättigten und/oder ungesättigten aliphatischen und/oder aromatischen Monocarbonsäuren bzw. Fettsäuregemischen; Acrylnitril, (Meth)acrylsäureamid, Vinylester von Alkanmonocarbonsäuren mit 2–5 Kohlenstoffatomen wie Vinylacetat oder Vinylpropionat oder Mischungen der vorgenannten Monomeren, vorzugsweise Acrylsäure und/oder Methacrylsäure.

Die Carboxylgruppen enthaltenden Monomeren der Gruppe A.d. können vor, während oder nach der Polymerisation mit Glycidylverbindungen, wie Glycid oder Glycidylester von Monocarbonsäuren mit 8–20 C-Atomen, vorzugsweise 10–16 C-Atomen, umgesetzt werden.

Die Glycidylverbindungen der Gruppe A.d. erlauben über die chemisch reaktive Epoxidgruppierung die Vernetzung mit carboxylgruppenhaltigen Verbindungen und dienen der Modifizierung des Polyacrylatharzes durch die Addition von Fettsäuren, wobei im Falle von ungesättigten Fettsäuren lufttrocknende Polyacrylatharze zugänglich sind.

worin
X für eine CH-Gruppe steht, wobei dann
R Wasserstoff und
m eine ganze Zahl von Null bis 9 bedeutet, oder
X für ein Stickstoffatom steht, wobei dann
R einen gesättigten aliphatischen Rest, vorzugsweise Methyl, einen araliphatischen Rest mit 7–12 Kohlenstoffatomen oder einen Pyridinrest oder einen durch niedere Alkylreste ($C_1$–$C_4$) substituierten Pyridinrest und
m die Zahl 3 bedeuten.

Gruppe B.:
Bevorzugte Lactame sind 1-N-Methyl-hexahydro-1,4-diazepinon-3, ω-Dodecyllactam, γ-Butyrolactam, δ-Valerolactam, insbesondere ε-Caprolactam.

Die Herstellung der Maleinsäurehalbester (Monomere der Gruppe A.c.II) aus Maleinsäureanhydrid und den substituierten 1,3-Dioxanen kann durch Erwärmen äquimolarer Mengen der Ausgangskomponenten bei 60–80 °C bis zur Säurezahl der Maleinsäurehalbester erfolgen. Es werden viskose Produkte erhalten, deren Reinheit gelpermeationschromatographisch untersucht wurde.

Die substituierten 1,3-Dioxane wurden nach einer allgemeinen Vorschrift aus äquimolaren Mengen Trimethylolpropan und den entsprechenden Aldehyden unter saurer Katalyse handelsüblicher Carboxylgruppen enthaltender Ionenaustauscherharze und Auskreisen des Reaktionswassers bei 100 °C hergestellt. Diese Verbindungen wurden durch Extraktion mit Ether isoliert; die Reinigung erfolgte durch fraktionierte Destillation. Dabei wurden folgende Verbindungen mit den angegebenen Kennzahlen erhalten:

| Ausgangsprodukte | | Endprodukte = substituierte 1,3-Dioxane |
|---|---|---|
| Trimethylolpropan | + Formaldehyd | 5-Ethyl-5-hydroxymethyldioxan-1,3<br>bp: 77–78,5 °C/0,7 mm Hg $n_D^{20}$ : 1,4638<br>(vgl. US-PS 4 076 727, Beispiel 1) |
| | + Acetaldehyd | 2-Methyl-5-ethyl-5-hydroxymethyl-dioxan-1,3<br>bp: 107–109 °C/1,5 mm Hg $n_D^{20}$ : 1,4570 |
| | + Propionaldehyd | 2,5-Diethyl-5-hydroxymethyl-dioxan-1,3<br>bp: 78 °C/0,2 mm Hg $n_D^{20}$ : 1,4581 |
| | + Butyraldehyd | 2-Propyl-5-ethyl-5-hydroxymethyl-dioxan-1,3<br>bp: 93 °C/0,2 mm Hg $n_D^{20}$ :1,4575 |
| | + Isobutyraldehyd | 2-Isopropyl-5-ethyl-5-hydroxymethyl-dioxan-1,3<br>bp: 81 °C/0,3 mm Hg $n_D^{20}$ : 1,4575 |
| | + Benzaldehyd | 2-Phenyl-5-ethyl-5-hydroxymethyl-dioxan-1,3<br>bp: 133 °C/0,3 mm Hg $n_D^{20}$ : 1,5287 |
| | + Aceton* | 2,2-Dimethyl-5-ethyl-5-hydroxymethyl-dioxan-1,3<br>bp: 85 °C/0,5 mm Hg $n_D^{20}$ : 1,4578 |

* Arbeitsvorschrift: analog E. Hannig, H. Wilhelm, Pharmazie 24 (1), 32 (1969)

Die Herstellung des Copolymerisatharzes (Komponente A) kann durch Copolymerisation der Bestandteile a.–d. nach üblichen Verfahren erfolgen, wobei der radikalischen Polymerisation in der Schmelze bzw. in Lösung der Vorzug gegeben wird. Die Polymerisation kann bei Temperaturen von 70–160 °C, vorzugsweise 100–150 °C, durchgeführt werden.

Die Monomeren a.–d. werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.
Bevorzugte Initiatoren zur Durchführung der radikalischen Polymerisation sind z.B. symmetrische aliphatische Azoverbindungen wie Azo-bis-isobuttersäurenitril, Azo-bis-2-methyl-valeronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, Brom-, Nitro-, Methyl- oder Methoxygruppen substituierte Benzoylperoxide sowie Lauroylperoxid; symmetrische Peroxydicarbonate, wie z.B. Diethyl-, Diisopropyl-, Dicyclohexyl- sowie Dibenzylperoxidicarbonat; tert.-Butylperoctoat oder tert.-Butylphenylperacetat sowie Peroxicarbonate wie tert.-Butyl-N-(phenylperoxi)-carbamat oder tert.-Butyl-N-(2,3-dichlor- oder -4-chlorphenyl-peroxi)carbamat. Weitere bevorzugte Peroxide sind: tert.-Butylhydroperoxid, Di-tert.-butylperoxid, Cumolhydroperoxid, Di-Cumolperoxid und tert.-Butylperpivalat.

Die Initiatoren können in Mengen von 0,2 bis 8,0 Gew.-%, bezogen auf Gesamtmonomere, eingesetzt werden. Ebenfalls können übliche Regler in Mengen von 0,1 bis 5 Gew.-%, bezogen auf Gesamtmonomere, bei der Polymerisation eingesetzt werden.

Wird in Lösung polymerisiert, so können inerte Lösungsmittel wie z.B. Ethanol, Propanol, Isopropanol, n- oder iso-Butanol, Methylethylketon, Toluol, Xylol, Essigsäurebutylester, Butylglykol usw. verwendet werden.

Besonders günstig ist es, die Copolymerisation

der Monomeren a.–d. in Gegenwart der Komponente B, d.h. der Lactame, durchzuführen, wobei direkt die erfindungsgemässen Bindemittel erhalten werden, welche je nach Wahl der Monomerenzusammensetzung sowohl zu konventionell oder wasserverdünnbar anwendbaren Lacken weiterverarbeitet werden können, ohne dass Verträglichkeitsprobleme oder Kristallisationserscheinungen beobachtet werden. Falls gewünscht, können zusätzlich zum Lactam auch die vorgenannten Lösungsmittel mitverwendet werden, deren Mengen, bezogen auf Lactam, bis zu 95 Gew.-% betragen können.

Da die eingesetzten Lactame gesättigt sind, reagieren sie mit den Monomeren nicht unter Copolymerisation, sondern setzen sich über ihre reaktive NH-Gruppe mit einem Vernetzungsmittel um. Die eingesetzten Lactame sind im wesentlichen nicht flüchtig und verbleiben daher beim Härten im Film.

Die Copolymerisate bzw. die Bindemittel (=Copolymerisat + Lactam) können im Anschluss an ihre Herstellung nach einer evtl. vorgenommenen Modifizierung bei Temperaturen von 140–200 °C von flüchtigen Bestandteilen befreit werden. Dies kann z.B. entweder unter Normaldruck in Schlangenrohrverdampfern durch Einblasen eines Inertgases wie Stickstoff oder Wasserdampf in Mengen von 0,1–1 $m^3$ auf 1 kg Harzschmelze oder im Vakuum in Ausdampfapparaturen wie Fallfilmverdampfern, Dünnschichtverdampfern, Schneckenverdampfern, Entspannungsverdampfern oder Sprühverdampfern erfolgen. Die Bedingungen werden so gewählt, dass das Lactam im Bindemittel verbleibt.

Die mittleren Molekulargewichte und die molekularen Uneinheitlichkeiten der Copolymerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, P. Rempp und H. Benoit, J. Polymer Sci. Part B, Polymer Letters 5 (1967) 753) aus der Verteilung der Chromatogramme die Molekulargewichtsmittelwerte $\overline{M}_w$ und $\overline{M}_n$ bestimmt. Die Polymerisate besitzen mittlere Molekulargewichte von $\overline{M}_n$=500–50 000, vorzugsweise $\overline{M}_n$=2000–25 000, und molekulare Uneinheitlichkeiten U (U= $\overline{M}_w/\overline{M}_n - 1$; $\overline{M}_w$=Gewichtsmittel, $\overline{M}_n$=Zahlenmittel des Molekulargewichts) von 0,5–30.

Nach der Herstellung der Copolymerisate werden diese mit Lactamen in den beanspruchten Verhältnissen abgemischt. Wurde in einem Lactam polymerisiert, entfällt das Abmischen mit Lactam bzw. kann Lactam innerhalb der beanspruchten Grenzen ergänzt werden.

Der Begriff «Lactame» schliesst in der vorliegenden Anmeldung die Anlagerungsprodukte der genannten Lactame mit einwertigen aliphatischen, gesättigten $C_1$–$C_{10}$-Alkoholen oder mit $C_2$–$C_8$-Glykolen oder mit Polyglykolen mit 3–4 OH-Gruppen wie Glycerin, Trimethylolpropan, Pentaerythrit usw. mit ein. Die Anlagerungsprodukte enthalten auf 1 Mol Lactam 0,2–5 Mole der vorgenannten Mono- oder Polyole. Derartige Anlagerungsprodukte sind in der DE-OS 2 062 288 beschrieben. Vorzugsweise sind in den Bindemitteln die freien Lactame enthalten.

Die erfindungsgemässen Bindemittel können lösungsmittelfrei oder in organischen Lösungsmitteln gelöst in Überzugsmitteln eingesetzt werden.

Geeignete organische Lösungsmittel sind die üblichen Lacklösungsmittel wie z.B. Alkohole mit 1–4 C-Atomen wie Methanol, Ethanol, n- und iso-Propanol, Butanole; Essigsäureester mit 2–4 C-Atomen in der Alkoholkomponente, wie Essigsäureethyl- und -butylester oder Ethylglykolacetat; Ethylenglykol-Monoalkylether mit 1–4 C-Atomen im Alkylrest wie Ethylenglykolmonomethyl-, -ethyl- und -butylether; aliphatische und alicyclische Ketone wie Methylethylketon, Methylisobutylketon, Cyclohexanon, Aceton; niedere Ether, wie Tetrahydrofuran; chlorierte Kohlenwasserstoffe, wie Trichlorethylen; aromatische Kohlenwasserstoffe wie Benzol, Toluol, Xylol oder Gemische der genannten Lösungsmittel.

Für den Einsatz als wasserverdünnbare Bindemittel wird nach der Herstellung saurer Copolymerisatharze in üblicher Weise mit einem Amin bzw. Alkali neutralisiert und mit Wasser auf die gewünschte Viskosität eingestellt.

Die Überzugsmittel selbst können Feststoffgehalte von 60–100 Gew.-% aufweisen.

Für die Vernetzung der erfindungsgemässen Bindemittel kommen eine Vielzahl von Verbindungsklassen in Frage. Besonders geeignet sind Aminoplastharze, Epoxyharze und Verbindungen mit endständiger Isocyanatgruppe. Diese Mittel sind im wesentlichen nicht flüchtig und vernetzen mit dem Mischpolymeren über besondere reaktionsfähige Gruppen, wie Methylol-, Methylolether-, Epoxy- und Isocyanatgruppen.

Als Beispiel für geeignete Aminoplastharze seien Amin-Aldehydharze, d.h. Aldehydkondensationsprodukte von Melamin, Harnstoff, Acetoguanamin oder ähnlichen Verbindungen genannt. Im allgemeinen wird als Aldehyd Formaldehyd verwendet, obwohl brauchbare Produkte auch mit anderen Aldehyden, wie Acetaldehyd, Crotonaldehyd, Acrolein, Benzaldehyd und Furfurylaldehyd erhalten werden. Die Melamin- und Harnstoffharze sind bevorzugt, doch können auch Kondensationsprodukte von anderen Aminen oder Amiden verwendet werden.

Als Aminoplastharze sind beispielsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1–4 C-Atomen veretherten Melamin-Formaldehyd-Kondensate, wie sie z.B. in der französischen Patentschrift 943 411 oder bei D. H. Solomon, The Chemistry of Organic Filmformers, 235–240, John Wiley & Sons, Inc., New York, 1967, beschrieben sind. Die Melaminharze können jedoch auch ganz oder teilweise durch andere vernetzende Aminoplaste, wie sie z.B. in «Methoden der organischen Chemie» (Houben-Weyl), Band 14/2, Teil 2, 4. Auflage,

Georg Thieme-Verlag, Stuttgart, 1963, 319 ff, beschrieben sind, ersetzt werden.

Bezogen auf Bindemittel können die Aminoplastharze in Mengen von 10 bis 50 Gew.-% eingesetzt werden.

Auch die als Vernetzungsmittel in Betracht kommenden Polyepoxide mit mehr als einer 1,2-Epoxidgruppe pro Molekül können hinsichtlich ihrer chemischen Struktur sehr stark variieren. Die zu verwendenden Polyepoxidverbindungen können Polyglycidylether mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken, (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. britische Patentschrift 1 024 288).

Ausser den Epoxyharzen auf Basis eines mehrwertigen Phenols und einer Chlorepoxyverbindung können auch die epoxydierten Ringverbindungen gemäss US-Patentschrift 2 716 123 verwendet werden.

Weiter seien genannt Glycidylether mehrwertiger Alkohole, beispielsweise aus 1,4-Butandiol, 1,4-Butendiol, Glycerin, Trimethylolpropan, Pentaerythrit und Polyethylenglykolen.

Von weiterem Interesse sind Triglycidylisocyanurat, N,N'-Diepoxypropyloxiamid, Polyglycidylthioether aus mehrwertigen Thiolen, wie beispielsweise aus Bismercaptomethylbenzol, Diglycidyl-trimethylentrisulfon, epoxidiertes Polybutadien, epoxidiertes Leinöl, Vinylcyclohexendiepoxid.

Ausserdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können, und Glycidylester von Umsetzungsprodukten aus 1 Mol eines aromatischen oder cycloaliphatischen Dicarbonsäureanhydrids und ½ Mol eines Diols bzw. 1/n Mol eines Polyols mit n Hydroxylgruppen, etwa Glycidylcarbonsäureester der allgemeinen Formel

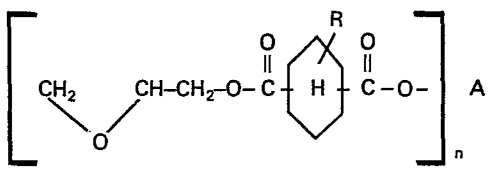

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1–3 C-Atomen und n eine Zahl zwischen 2 bis 6 bedeuten, oder Mischungen von Glycidylcarbonsäureestern der angegebenen allgemeinen Formel (vgl. britische Patentschrift 1 220 702).

Die Polyepoxide werden in solchen Mengen eingesetzt, dass auf eine 1,2-Epoxidgruppe 0,6–1,4 Grammäquivalente an Carboxy- und/oder Hydroxylgruppen entfallen.

Von besonderem Interesse sind Epoxidharze, die mit Monocarbonsäuren umgesetzt wurden, insbesondere mit Fettsäuren, wie denjenigen aus Leinsamenöl, Sojaöl, Safranöl, Perillaöl, Tungöl, Mohnsamenöl, Sonnenblumenöl, Tallöl, Walnussöl, dehydratisiertes Ricinusöl, Heringöl u. dgl. Die Epoxidharze können in einfacher Weise verestert werden, indem man sie in Gegenwart von einer oder mehreren Carboxylsäuren unter Rückflusskühlung erwärmt und das Wasser gleichzeitig azeotrop entfernt.

Die mit Fettsäuren veresterten Epoxidharze können, bezogen auf Bindemittel, in Mengen von 10 bis 50 Gew.-% eingesetzt werden.

Als Vernetzungsmittel können weiterhin Verbindungen mit endständigen Isocyanatgruppen benutzt werden. Verbindungen dieser Art sind z.B. Polyisocyanate, wie die aliphatischen Trimethylen-, Tetramethylen-, Pentamethylen-, Hexamethylen-, 1,2-Propylen-, 1,2-Butylen-, 2,3-Butylen-, 1,3-Butylen-, Ethylidin- und Butylidindiisocyanate; die Cycloalkylendiisocyanate, wie 1,3-Cyclopentan-, 1,4-Cyclohexan- und 1,2-Cyclohexandiisocyanate; die aromatischen Diisocyanate, wie m-Phenylen-, p-Phenylen-, 4,4'-Diphenyl-, 1,5-Naphthalin- und 1,4-Naphthalindiisocyanate; die aliphatisch-aromatischen Diisocyanate, wie 4,4'-Diphenylenmethan-, 2,4- oder 2,6-Tolylen- (oder ihre Mischungen), 4,4'-Toluidin- und 1,4-Xylylendiisocyanate; die kernsubstituierten aromatischen Verbindungen, wie Dianisidindiisocyanat, 4,4'-Diphenyletherdiisocyanat und Chlordiphenylendiisocyanat; die Triisocyanate, wie Triphenylmethan-4,4', 4''-Triisocyanat, 1,3,5-Benzoltriisocyanat und 2,4,6-Toluoltriisocyanat und die Tetraisocyanate, wie 4,4'-Diphenyldimethyldimethan-2,2'-5,5'-tetraisocyanat; die polymerisierten Polyisocyanate, wie das Dimere und Trimere von Tolylendiisocyanat u.dgl.

Das organische Polyisocyanat kann auch ein Präpolymeres sein, das sich von einem Polyol ableitet, einschliesslich eines Polyetherpolyols oder eines Polyesterpolyols und einschliesslich von Polyethern, die mit einem Überschuss von

Polyisocyanaten unter Bildung von Verbindungen mit endständigen Isocyanatgruppen umgesetzt worden sind. Die Präpolymeren können aus einfachen Polyolen hergestellt werden, wie z.B. aus Glykolen, wie Ethylenglykol und Propylenglykol, Glycerin, Trimethylolpropan, Hexantriol, Pentaerythrit u.dgl. oder Monoethern wie z.B. Diethylenglykol, Tripropylenglykol und ähnlichen Polyethern, d.h. Alkylenoxidkondensaten der vorstehenden Verbindungen. Unter den Alkylenoxiden, die mit diesen Polyolen unter Bildung von Polyethern umgesetzt werden können, sind Ethylenoxyd, Propylenoxid, butylenoxid Styroloxid u. dgl. die bekanntesten.

Wenn als Vernetzungsmittel eine Verbindung mit einer endständigen Isocyanatgruppe verwendet wird, liegt bevorzugt das Mol-Verhältnis der Verbindung mit endständiger Isocyanatgruppe zu den hydroxylgruppenhaltigen Mischpolymeren bei etwa 1:1.

Die mit den erfindungsgemässen Bindemitteln hergestellten Überzugsmittel können Pigmente, wie Titandioxid, Russ, Talkum, Bariumsulfat, Zinksulfat, Strontiumchromat, Bariumchromat, Eisenoxid und auch farbige Pigmente wie Cadmiumgelb, Cadmiumrot, Toluidinrot, hydratisiertes Eisenoxid u.dgl. enthalten, um jede gewünschte Farbe zu erhalten und die Filmeigenschaften zu verändern. Das Verschneiden des harzartigen Trägers und der Pigmentformulierung erfolgt in Übereinstimmung mit den gut bekannten Methoden.

Die erfindungsgemässen Bindemittel können zur Erzielung besonderer Eigenschaften mit anderen Oligomeren, wie z.B. Polyestern und Alkydharzen oder Siliconharzen, in jedem Verhältnis abgemischt werden. Ferner sind sie mit den üblichen Lackhilfsmitteln, wie Celluloseestern, Verlaufsmitteln, Siliconölen, Weichmachern, Thixotropiermitteln in üblichen Mengen mischbar.

Die in dieser Weise hergestellten Überzugsmittel können unter Verwendung der üblichen Verfahren aufgetragen werden, z.B. durch Umkehrwalzenbeschichter, Sprühen, Streichen und Tauchen oder ähnliche übliche Arbeitsweisen.

Als zu überziehende bzw. zu beschichtende Substrate kommen Metalle, Holz, Papier, Kartonagen, Textilien, Leder, Glas, Kunststoffe, keramische Materialien u.a. in Frage.

Die Härtungsbedingungen hängen von dem Substrat und der Zusammensetzung des Überzugsmittels ab. Im Falle der Vernetzung mit Isocyanatgruppen enthaltenden Härtungsmitteln oder mit Epoxidharzen, die mit trocknenden Fettsäuren modifiziert sind, kann die Härtung schon ab Raumtemperatur erfolgen. Im allgemeinen kann die Härtung bei Temperaturen von 80 °C – 250 °C erfolgen, wobei die Bedingungen so zu wählen sind, dass das Lactam nicht vorzeitig verdampft. Es ist manchmal vorteilhaft, die Härtung zunächst bei Temperaturen unter 120 °C zu beginnen und bei Temperaturen über 120 °C zu vervollständigen.

Die mit den erfindungsgemässen Bindemitteln hergestellten Überzugsmittel ergeben nach ihrer Härtung Überzüge mit guten anwendungstechnischen Daten und von guter Witterungsbeständigkeit.

Die in den Beispielen angegebenen Teile und Prozentzahlen beziehen sich auf das Gewicht, sofern nicht anders vermerkt.

Beispiel 1

Ein Reaktor, der mit Heizung, automatischer Temperaturregelung, Rührer, Dosiereinrichtung, Rückflusskühler und Stickstoffeinleitung ausgestattet war, wurde mit 998,7 Teilen eines Trimethylolpropans/ε-Caprolactam-Adduktes im Molverhältnis 1:2 beschickt und auf 110 °C aufgeheizt. Zu diesem reaktionsfähigen Gemisch wurde bei isothermer Fahrweise eine Mischung aus 766,5 Teilen Styrol, 546,0 Teilen eines Halbesters, erhalten aus 5-Hydroxymethyl-5-ethyl-dioxan-1,3 und Maleinsäureanhydrid im Mol-Verhältnis 1:1, 449,1 Teilen n-Butylacrylat und 9,0 Teilen Mercaptoethanol unter Rühren innerhalb von 3 Stunden gegeben. Gleichzeitig wurde eine Initiatormischung aus 59,4 Teilen tert.-Butylperoctoat und 171,3 Teilen des oben angegebenen Adduktes über einen Zeitraum von 4 Stunden dosiert. Nach dem Ende der Dosierung wurde noch 3 Stunden bei 110 °C gerührt und anschliessend über Filter abgedrückt. Das resultierende Bindemittel bestehend im wesentlichen aus einer Mischung des Copolymerisats und Lactamanlagerungsprodukt wird in ca. 96%iger Ausbeute, bezogen auf Summe aus Monomeren und Lactamanlagerungsprodukt, erhalten.

Beispiel 2

Bei diesem Beispiel wurde analog zum vorangegangenen gearbeitet. Es wurden im Reaktor 998,7 Teile ε-Caprolactam vorgelegt. Bei 110 °C wurden ein Monomerengemisch, bestehend aus 766,5 Teilen Styrol, 546 Teilen des in Beispiel 1 verwendeten Maleinsäurehalbesters, 449,1 Teilen n-Butylacrylat und 9 Teilen Mercaptoethanol, und eine Mischung, bestehend aus 59,4 Teilen tert.-Butylperoctoat und 171,3 Teilen Butylblykol, wie in Beispiel 1 dosiert. Nach Beendigung des Nachrührens und Entfernen der flüchtigen Bestandteile bei Temperaturen bis 150 °C resultiert ein vernetzbares Harz aus einer Mischung aus Copolymerisat und Lactam (Bindemittel) in 98%iger Ausbeute.

Da in allen folgenden Beispielen 3–16 analog zum Beispiel 1 verfahren wurde, erfolgt für diese Beispiele nur eine tabellarische Aufzählung der für die Herstellung der Bindemittel eingesetzten Ausgangsstoffe (siehe Tabelle 1).

Herstellung eines Überzugsmittels

83,4 Teile der gemäss der Beispiele 1–16 hergestellten Bindemittel, frei von flüchtigen Bestandteilen, 16,6 Teile eines handelsüblichen mit Methanol veretherten Melaminformaldehydharzes (z.B. Resimene 745 (R), Handelsprodukt der Firma Monsanto), 67 Teile eines Butylglykol/Wasser-Gemisches (Volumenverhältnis 1:1), 80 Teile Titandioxid (Rutiltyp, 2,0 Teile eines handelsüblichen Verlaufsmittels, 1 Teil p-Toluolsulfonsäure (10%ig in Isopropanol) werden 10 Minuten auf einem

Walzenstuhl angerieben. Das resultierende Überzugsmittel wird in 40 μ Schichtdicke auf entfettete Stahlbleche aufgezogen und 30 Minuten bei 150 °C eingebrannt. Die anwendungstechnischen Daten der eingebrannten Filme gehen aus Tabelle 2 hervor.

Tabelle 1
Zusammensetzung der Startkomponenten für erfindungsgemässe Bindemittel

| Beispiele Zusammensetzung (Gew.-Tl.) | 3 | 4 | 5 | 6 | 7 | 8 | 9 | 10 | 11 | 12 | 13 | 14 | 15+ | 16 |
|---|---|---|---|---|---|---|---|---|---|---|---|---|---|---|
| ε-Caprolactam | 998,7 | 998,7 | 750,0 | 750,0 | 750,0 | 600,0 | 600,0 | 600,0 | 600,0 | 600,0 | 600,0 | 600,0 | 600,0 | 600,0 |
| Butylglykol | 171,3 | 162,3 | 171,3 | 171,3 | 171,3 | 321,3 | 321,3 | 321,3 | 321,3 | 321,3 | 321,3 | 321,3 | 171,3 | – |
| Xylol | – | – | – | – | – | – | – | – | – | – | – | – | – | 595,5 |
| Styrol | 466,5 | 466,5 | 678,3 | 672,3 | 667,2 | 678,3 | 672,3 | 667,2 | 658,5 | 659,1 | 659,1 | 654,1 | 729,5 | 822,9 |
| Butylacrylat | 600,0 | 749,1 | 909,0 | 900,3 | 891,0 | 909,0 | 900,3 | 891,0 | 885,5 | 882,2 | 882,0 | 867,0 | 978,0 | 528,3 |
| Acrylsäure | 149,1 | – | 138,6 | 138,6 | 138,6 | 138,6 | 138,6 | 138,6 | 138,6 | 138,6 | 138,6 | 138,6 | 149,2 | 11,4 |
| Hydroxypropylmethacrylat | – | – | – | – | – | – | – | – | – | – | – | – | – | 336,6 |
| Methylmethacrylat | – | – | – | – | – | – | – | – | – | – | – | – | – | 34,5 |
| Maleinsäurehalbester** | 546,0[1)] | 546,0[1)] | 253,8[1)] | 268,5[2)] | 282,9[3)] | 253,8[1)] | 268,5[2)] | 282,9[3)] | 297,6[4)] | 300,0[5)] | 300,0[6)] | 320,0[7)] | 273,0[1)] | – |
| tert.-Butylperoctoat | 59,4 | 59,4 | 75,0 | 75,0 | 75,0 | 75,0 | 75,0 | 75,0 | 75,0 | 75,0 | 75,0 | 75,0 | 75,0 | 59,4 |
| Mercaptoethanol | 9,0 | 18,0 | 24,0 | 24,0 | 24,0 | 24,0 | 24,0 | 24,0 | 24,0 | 24,0 | 24,0 | 24,0 | 24,0 | 11,4 |

**)

1) (5-Ethyl-5-m-dioxanyl)methyl-maleinsäurehalbester
2) (2-Methyl-5-ethyl-5-m-dioxanyl)-methyl-maleinsäurehalbester
3) (2,2-Dimethyl-5-ethyl-5-m-dioxanyl)-methyl-maleinsäurehalbester
4) (2-Ethyl-5-ethyl-5-m-dioxanyl)-methyl-maleinsäurehalbester
5) (2-Propyl-5-ethyl-5-m-dioxanyl)-methyl-maleinsäurehalbester
6) (2-Isopropyl-5-ethyl-5-m-dioxanyl)-methyl-maleinsäurehalbester
7) (2-Phenyl-5-ethyl-5-m-dioxanyl)-methyl-maleinsäurehalbester

+ in diesem Beispiel wurde der Maleinsäurehalbester zusammen mit dem ε-Caprolactam vorgelegt.

Tabelle 2
Anwendungstechnische Daten von Überzügen aus erfindungsgemässen Bindemitteln
Beispiele

| Prüfergebnisse | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Säurezahl des Copolymerisat mg KOH/g Substanz (DIN 53 402) | 64 | 72 | 75 | 42 | 54 | 54 | 52 | 53 | 52 | 52 | 54 | 49 | 50 | 50 | 54 | 10 |
| Glanz nach Gardner (∢20 °) (ASTM 523) | 16 | 82 | 64 | 39 | 76 | 75 | 70 | 72 | 77 | 70 | 67 | 74 | 68 | 71 | 75 | 78 |
| Vergilbung (Elrepho) | 68,9 | 78,7 | 76,2 | 69,2 | 78,6 | 80,7 | 82,6 | 81,0 | 80,4 | 78,4 | 68,8 | 77 | 64,4 | 76,0 | 77 | 79 |
| Pendelhärte nach König (sec) | 152 | 145 | 151 | 61 | 120 | 94 | 89 | 89 | 83 | 97 | 85 | 77 | 84 | 87 | 98 | 88 |
| Haftfestigkeit (Gitterschnitt) (DIN 53 151) | 1 | 1 | 0,5 | 0,5 | 1 | 0,5 | 0,5 | 1 | 1 | 0,5 | 1 | 0,5 | 0,5 | 0,5 | 0,5 | 0,5 |
| Erichsendehnung (mm) (DIN 53 156) | 2,5 | 4,4 | 3,0 | 6,1 | 5,2 | 6,9 | 7,0 | 7,3 | 7,0 | 6,9 | 8,1 | 8,3 | 7,6 | 7,6 | 7,9 | 7,6 |

**Patentansprüche**

1. Vernetzbare Lackbindemittel aus einer Mischung aus

A) 99–50 Gew.-% eines Copolymerisats bestehend aus copolymerisierten Einheiten von

a) 5–90 Gew.-% eines Esters der Acryl- oder Methacrylsäure mit 1–8 Kohlenstoffatomen in der aliphatischen Alkoholkomponente oder deren Mischungen;

b) 0–60 Gew.-% eines Vinyl- oder Isopropylenaromaten mit 8–14 Kohlenstoffatomen oder deren Mischungen;

c) 1–40 Gew.-% mindestens eines copolymerisierbaren Monoesters aus den Gruppen

I. Monoester aus Acryl- oder Methacrylsäure und einem zwei- bis vierwertigen Alkohol mit 2–8 Kohlenstoffatomen oder deren Mischungen, und/oder

II. Maleinsäurehalbester der Formel

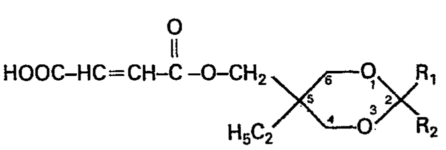

worin
$R_1$=H oder Methyl und
$R_2$=H, Methyl, Ethyl, Propyl, Isopropyl oder Phenyl bedeuten;
und gegebenenfalls

d) bis zu 60 Gew.-% eines oder mehrerer olefinisch ungesättigter copolymerisierbarer Monomerer, die nicht unter a) bis c) fallen, und

B) 1–50 Gew.-% eines gesättigten Lactams der Formel

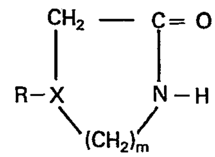

worin
X für eine CH-Gruppe steht, wobei dann
R Wasserstoff, und
m eine ganze Zahl von Null bis 9 bedeutet, oder
X für ein Stickstoffatom steht, wobei dann
R einen gesättigten aliphatischen Rest, einen araliphatischen Rest mit 7–12 Kohlenstoffatomen oder einen Pyridinrest oder einen durch niedere Alkylreste ($C_1$–$C_4$) substituierten Pyridinrest, und
m die Zahl 3 bedeuten.

2. Vernetzbare Lackbindemittel nach Anspruch 1, dadurch gekennzeichnet, dass die Komponente A) c) ein Maleinsäurehalbester der unter II angegebenen Formel ist.

3. Verwendung der Lackbindemittel gemäss Anspruch 1 zur Herstellung von vernetzbaren Überzugsmitteln.

**Revendications**

1. Liant réticulable pour laque ou vernis, constitué d'un mélange de:

A) 99 à 50% en poids d'un copolymère consistant en des motifs copolymérisés de:

a) 5 à 90% en poids d'un ester de l'acide acrylique ou méthacrylique comportant 1 à 8 atomes de carbone dans le constituant alcool aliphatique, ou un de leurs mélanges;

b) 0 à 60% en poids d'un composé vinyl- ou isopropylène-aromatique comportant 8 à 14 atomes de carbone, ou un de leurs mélanges;

c) 1 à 40% en poids d'au moins un monoester copolymérisable choisi parmi:

I) un monoester de l'acide acrylique ou méthacrylique et d'un di- à tétra-alcool comportant 2 à 8 atomes de carbone, ou un de leurs mélanges, et/ou

II) un hémi-ester de l'acide maléique de formule:

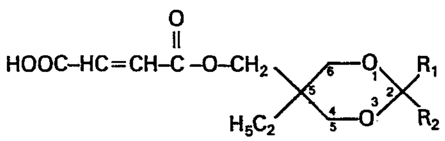

où $R_1$ représente H ou un groupe méthyle, et $R_2$ représente un groupe H ou un groupe méthyle, éthyle, propyle, isopropyle ou phényle;

et éventuellement

d) jusqu'à 60% en poids d'un ou plusieurs monomères copolymérisables, à insaturation oléfinique, qui n'entrent pas dans les catégories a) à c), et

B) 1 à 50% en poids d'un lactame saturé de formule:

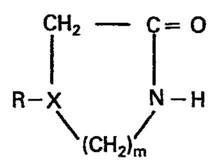

dans laquelle:

X est un groupe CH, et
R est un atome d'hydrogène et
m est un nombre entier valant de 0 à 9, ou
X est un atome d'azote et alors
R est un reste aliphatique saturé, un reste araliphatique ayant 7 à 12 atomes de carbone ou un reste de pyridine ou un reste de pyridine substitué par des restes alkyles inférieurs (en $C_1$ à $C_4$) et
m représente le nombre 3.

2. Liant réticulable pour laque ou vernis selon la revendication 1, caractérisé en ce que le constituant A) c) est un hémi-ester de l'acide maléique répondant à la formule indiquée en II).

3. Utilisation des liants pour laque ou vernis selon la revendication 1 pour la préparation d'agents de revêtement réticulables.

**Claims**

1. Cross-linkable lacquer binders prepared from a mixture of

A) 99–50% by weight of a copolymer consisting of copolymerised units of

a) 5–90% by weight of an ester of acrylic or methacrylic acid containing 1–8 carbon atoms in the aliphatic alcohol component, or mixtures thereof;

b) 0–60% by weight of an aromatic vinyl or isopropylene compound containing 8–14 carbon atoms, or mixtures thereof;

c) 1–40% by weight of at least one copolymerised mono-ester from the following groups

I. mono-esters of acrylic or methacrylic acid and an alcohol having a valency of from 2 to 4 having 2–8 carbon atoms, or mixtures thereof, and/or

II. Maleic acid semi-esters of the formula

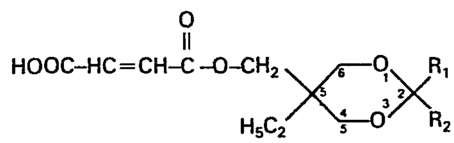

wherein
$R_1$=H or methyl and
$R_2$=H, methyl, ethyl, propyl, isopropyl or phenyl;
and optionally

d) up to 60% by weight of one or more olefinically unsaturated copolymerisable monomers which do not come under a) to c), and

B) 1–50% by weight of a saturated lactam of the formula

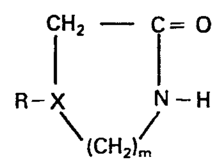

wherein

X represents a CH group, in which case
R represents hydrogen and
m denotes an integer from zero to 9, or
X represents a nitrogen atom, in which case
R represents a saturated aliphatic radical, an araliphatic radical with 7–12 carbon atoms or a pyridine radical or a pyridine radical substituted by lower alkyl radicals ($C_1$–$C_4$), and
m denotes the number 3.

2. Cross-linkable lacquer binders according to Claim 1, characterised in that the component A) c) is a maleic acid semi-ester of the formula given under II.

3. Use of the lacquer binders according to Claim 1 for the preparation of cross-linkable coating compositions.